# EUROPEAN PATENT APPLICATION

(11) **EP 2 922 187 A1**
(43) Date of publication of application: **23.09.2015**
(21) Application number: 15157756.6
(22) Date of filing: 05.03.2015
(51) Int. Cl.: H02K 15/04

(54) **Coil winding apparatus, and coil winding method**

(30) Priority: 19.03.2014 JP 2014056271
(71) Applicant: Kabushiki Kaisha Toshiba, Tokyo 105-8001 (JP)
(72) Inventor: Lin, Chiayu, Tokyo, 105-8001 (JP)
(74) Representative: Hoffmann Eitle

(57) **Abstract**

According to an embodiment, a coil winding apparatus (10) includes a coil winding section (30), a mounting section (40), a support section (80), a moving section (51,52,53,54), and a control section (60,70). The support section (80) supports a portion of a wire material (5) between the coil winding section (30) and a mounting surface (41) of the mounting section (40). The moving section (51,52,53,54) moves a position of the support section (80). The control section (60,70) controls the moving section (51,52,53,54) such that the position of the support section (80) moves to a support target position which overlaps a mounting target position in a substantially vertical direction.

## Description

### FIELD

Embodiments described herein relate generally to a coil winding apparatus which performs a bend process on a wire material, and a coil winding method of performing a bend process on a wire material.

### BACKGROUND

There has been proposed a coil forming apparatus including a coil winding section which performs a bend process on a wire, and a mounting stage on which the wire, which has been subjected to the bend process by the coil winding section, is mounted. The coil winding section includes, for example, a pair of bending rollers which clamp the wire, and performs the bend process on the wire by clamping the wire between the bending rollers and applying a load in a direction of clamping. The bend process, which is performed on the wire, is executed based on the shape of a desired coil.

In addition, when the mounting stage is located below the coil winding section, the wire deforms due to the own weight of the wire while the wire, which has been subjected to the bend process by the coil winding section, is being moved to the mounting stage. In order to prevent this deformation of the wire, there has been proposed a coil forming apparatus which includes a support device that supports a portion of the wire between the coil winding section and the mounting stage.

### BRIEF DESCRIPTION OF THE DRAWINGS

FIG. 1 is a plan view illustrating a coil winding apparatus according to a first embodiment.
FIG. 2 is a side view illustrating the coil winding apparatus.
FIG. 3 is a plan view illustrating a coil formed by the coil winding apparatus.
FIG. 4 is a plan view illustrating a mounting stage of the coil winding apparatus.
FIG. 5 is a plan view illustrating the vicinity of a bend process section in a case of assuming a state in which a predetermined time has passed since the start of driving of a coil winding machine.
FIG. 6 is a plan view illustrating the shape of a processed portion of a wire in a case of assuming a state in which the wire has been processed.
FIG. 7 is a plan view illustrating the position and attitude of the processed portion of the wire on XY coordinates in the case of assuming the state in which the wire has been processed.
FIG. 8 is an explanatory view illustrating means for calculating a distance between each position of the processed portion of the wire in the case of assuming the state in which the wire has been processed, and the rotational center of a rotary shaft portion of a guiding device.
FIG. 9 is a plan view illustrating the position of an intersection between a circle having a center at the rotational center of the rotary shaft portion and having a radius, which is equal to the length of a support beam, and the processed portion of the wire in the case of assuming the state in which the wire has been processed.
FIG. 10 is a plan view illustrating a rotational angle of the support beam.
FIG. 11 is a plan view illustrating a state in which a support section has been moved onto a support target position by the guiding device.
FIG. 12 is a front view illustrating the vicinity of a distal end of a support beam of a coil winding apparatus according to a second embodiment.

### DETAILED DESCRIPTION

In general, according to one embodiment, a coil winding apparatus includes a coil winding section configured to perform a bend process on a wire material; a mounting section including a mounting surface disposed below the coil winding section, the mounting section being configured to be movable relative to the coil winding section such that a bend-processed portion of the wire material is mounted at a mounting target position which is preset on the mounting surface; a support section configured to support a portion of the wire material between the coil winding section and the mounting surface; a moving section configured to move a position of the support section; and a control section configured to control the moving section such that the position of the support section moves to a support target position which overlaps the mounting target position in a substantially vertical direction.

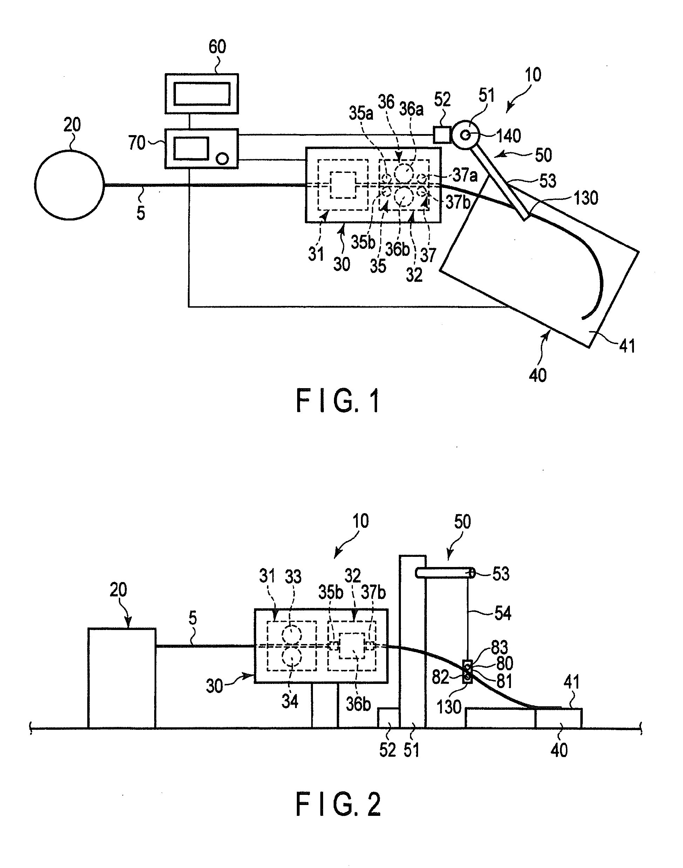

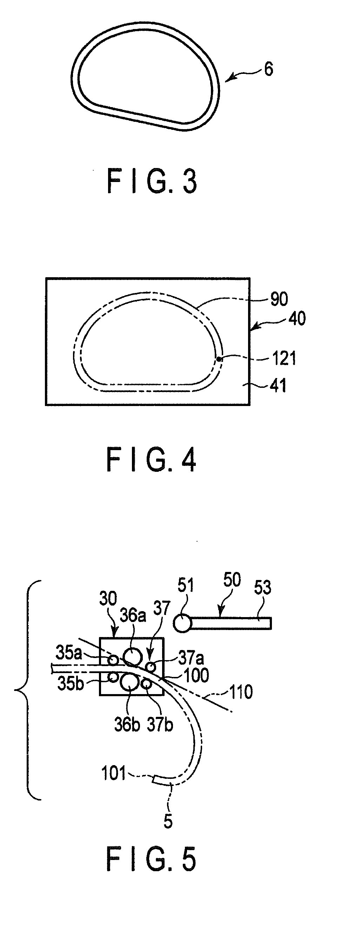

A coil winding apparatus according to a first embodiment will now be described with reference to FIG. 1 to FIG. 11. FIG. 1 is a plan view illustrating a coil forming apparatus 10. The coil forming apparatus (coil winding apparatus) 10 is configured to be able to form a coil 6 (shown in FIG. 3) by winding a wire (wire material) 5.

As illustrated in FIG. 1, the coil forming apparatus 10 includes a bobbin 20 which is an example of a supply section that supplies the wire 5; a coil winding machine (coil winding section) 30 which performs a bend process on the wire 5 that is supplied from the bobbin 20; a mounting stage (mounting section) 40 on which the wire 5 that has been subjected to the bend process by the coil winding machine 30 is mounted; a guiding device 50 which guides that portion of the wire 5, which has been subjected to the bend process by the coil winding machine 30, to the mounting stage 40; a motion controller (control section) 70 which controls the operation of the coil winding machine 30, the operation of the mounting stage 40 and the operation of the guiding device 50; and a computer (a control module, a control information creation module, a memory module) 60 which creates various information for use when the motion controller 70 controls the coil winding machine 30, mounting stage 40 and guiding device 50.

FIG. 2 is a side view illustrating the coil forming apparatus 10. As illustrated in FIG. 1 and FIG. 2, the coil winding machine 30 includes a feed section 31 and a bend process section 32. The feed section 31 is configured to be able to feed the wire 5, which is supplied from the bobbin 20, to the bend process section 32. The feed section 31 includes a pair of rollers 33 and 34 which are disposed to be opposed to each other. The rollers 33 and 34 are configured to be rotatable and adjustable in rotation speed by the control of the motion controller 70. The roller 33 and 34 are disposed with such a gap as to be able to clamp the wire 5 therebetween.

The bend process section 32 is configured to be able to perform a bend process on the wire 5 which is fed from the feed section 31, so that a desired coil may be formed. The bend process section 32 includes a first clamp section 35, a second clamp section 36 and a third clamp section 37, which are configured to be able to clamp the wire 5. The first clamp section 35 includes a first roller 35a, and a second roller 35b disposed with such a gap as to be able to clamp the wire 5 between the second roller 35b and the first roller 35a. The roller 35a, 35b is formed to be rotatable about a rotational axis which is parallel to a vertical direction. The vertical direction is a direction in which a gravitational force acts.

The second clamp section 36 is disposed at a position ahead of the first clamp section 35 in the direction of feed of the wire 5. The second clamp section 36 includes a third roller 36a, and a fourth roller 36b disposed with such a gap as to be able to clamp the wire 5 between the fourth roller 36b and the third roller 36a. The roller 36a, 36b is formed to be rotatable about a rotational axis which is parallel to the vertical direction.

The third clamp section 37 is disposed at a position ahead of the second clamp section 36 in the direction of feed of the wire 5. The third clamp section 37 includes a fifth roller 37a, and a sixth roller 37b disposed with such a gap as to be able to clamp the wire 5 between the sixth roller 37b and the fifth roller 37a. The roller 37a, 37b is formed to be rotatable about a rotational axis which is parallel to the vertical direction.

The clamp sections 35, 36 and 37 are formed such that their relative positions are movable. Specifically, the rollers 35a and 35b of the first clamp section 35 are configured to be movable in a direction intersecting with the vertical direction, while keeping such a relative position as to be able to clamp the wire 5 and keeping their rotational axes in an attitude parallel to the vertical direction. Similarly, the rollers 36a and 36b of the second clamp section 36 are configured to be movable in a direction intersecting with the vertical direction, while keeping such a relative position as to be able to clamp the wire 5 and keeping their rotational axes in an attitude parallel to the vertical direction. Likewise, the rollers 37a and 37b of the third clamp section 37 are configured to be movable in a direction intersecting with the vertical direction, while keeping such a relative position as to be able to clamp the wire 5 and keeping their rotational axes in an attitude parallel to the vertical direction.

The mounting stage 40 includes a mounting surface 41 which is perpendicular to the vertical direction, the mounting surface 41 being formed to be able to mount thereon that portion of the wire 5, which has been processed by the coil winding machine 30. The mounting stage 40 is formed to be rotatable about a rotational axis parallel to the vertical direction, by the control of the motion controller 70. The mounting surface 41 is located below the coil winding machine 30. This aims at preventing the mounting stage 40 from interfering with the coil winding machine 30, even when the mounting stage 40 rotates.

The guiding device 50 includes a rotary shaft portion (moving section) 51 which is formed to be rotatable; a driving section (moving section) 52 which is, for example, an electric motor configured to be able to drive the rotary shaft portion 51; a support beam (moving section) 53 coupled to the rotary shaft portion 51; a suspend wire (moving section) 54 which is suspended from a distal end of the support beam 53; and a support section 80 which supports a portion of the wire 5 between the coil winding machine 30 and the mounting stage 40.

The rotary shaft portion 51 is disposed in the vicinity of the mounting stage 40 at such a position as not to interfere with the mounting stage 40. The rotary shaft portion 51 extends in parallel to the vertical direction, and is formed to be rotatable about an axis parallel to the vertical direction. The configuration in which the rotational center of the rotary shaft portion 51 is parallel to the vertical direction is an example of the configuration in which the rotational center of the rotary shaft portion 51 is parallel to a direction intersecting with a horizontal direction.

The driving section 52 is configured to be able to drive the rotary shaft portion 51 by the control of the motion controller 70 (to be described later). The rotary shaft portion 51 is rotated by being driven by the driving section 52.

One end of the support beam 53 is fixed to a peripheral surface of the rotary shaft portion 51. The support beam 53 extends in a direction perpendicular to the rotary shaft portion 51. The suspend wire 54 is, for example, suspended from a distal end of the support beam 53. The suspend wire 54 is formed to be able to fix the support section 80 at its lower end.

The support section 80 is provided at the lower end of the suspend wire 54. The support section 80 movably supports the wire 5. Specifically, the support section 80 includes, for example, a base portion 81, a seventh roller 82 which is rotatably provided on the base portion 81, and an eighth roller 83 which is rotatably provided on the base portion 81.

The eighth roller 83 is disposed with such a gap as to be able to clamp the wire 5 between the seventh roller 82 and the eighth roller 83. The rotational axis of the roller 82, 83 is, for example, perpendicular to the vertical direction. The support section 80 can support the wire 5 by clamping the wire 5 between the rollers 82 and 83. Since the rollers 82 and 83 are rotatable, the wire 5 is movably supported on the support section 80.

The length of the support beam 53 from the rotary shaft portion 51 to the position at which the suspend wire 54 is provided, that is, the length from the rotary shaft portion 51 to the distal end of the support beam 53 in this embodiment, is such a length that the support section 80 can be disposed at a position overlapping, in the vertical direction, a mounting target position 90 which is set on the mounting surface 41 of the mounting stage 40. The mounting target position 90 will be concretely described later.

The length of the suspend wire 54 is such a length that the support section 80 is positioned between the coil winding machine 30 and the mounting surface 41 in the vertical direction.

The computer 60 includes first to sixth functions which will be described below. The first function is a function of determining the feed speed of the wire 5 by the feed section 31 of the coil winding machine 30. Specifically, the computer 60 determines the rotational speed of the rollers 33 and 34, for example, based on the information of the shape of the coil 6, which is input, and the information of a formation time which is required for the formation of one coil 6. FIG. 3 is a plan view illustrating the coil 6. The information of the shape of the coil 6 is, for example, information of CAD, etc. The information of the shape of the coil 6 is input to the computer 60 by, for example, the operator.

The second function is a function of calculating control information which is necessary for controlling the coil winding machine 30, before the coil winding machine 30 operates, that is, before a bend process is performed on the wire 5. Specifically, the computer 60 creates, as the control information necessary for controlling the coil winding machine 30, movement information of the first to third clamp sections 34, 35 and 36 of the bend process section 32, based on the information of the shape of the coil 6 and the information of the feed speed of the wire 5 which has been calculated by the first function.

The third function is a function of creating control information for moving the mounting stage 40 relative to the coil winding machine 30, thereby to mount the wire 5, which has been subjected to the bend process by the bend process section 32, onto the mounting target position 90 that is set on the mounting stage 40.

In the present embodiment, for example, the coil winding machine 30 is fixed, and the mounting stage 40 is rotatable about a rotational axis that is parallel to the vertical direction. Thus, the computer 60 creates rotation information of the mounting stage 40 as the above-described control information. In the creation of the rotation information of the mounting stage 40, the third function further includes functions 3-1, 3-2 and 3-3.

The function 3-1 is a function of setting the mounting target position 90 on the mounting surface 41 of the mounting stage 40. FIG. 4 is a plan view illustrating the mounting stage 40. FIG. 4 shows the mounting target position 90 by a two-dot-and-dash line. As illustrated in FIG. 4, the mounting target position 90 is information indicative of a position on the mounting surface 41, at which the coil 6 is to be placed. Based on the information of the shape of the coil 6, the computer 60 creates the information of the mounting target position 90.

The function 3-2 is a function of assuming, before the wire 5 is processed, the state in which the wire 5 has been processed, and calculating the shape of the portion of the wire 5, which has been processed by the coil winding machine 30, at each time point after the start of operation of the coil winding machine 30.

In other words, the function 3-2 is a function of assuming the state in which the wire 5 has been bend-processed, in a state before the coil winding machine 30 is driven, that is, in a state in which the wire 5 has not been bend-processed, and calculating the information of the shape of the portion of the wire 5, which has been bend-processed, at each time point during the bend process.

The function 3-2 is described more concretely. FIG. 5 is a view illustrating a case of assuming a state in which a predetermined time has passed since the start of driving of the coil winding machine 30. The "predetermined time", in this context, is a time which is arbitrarily set for assuming this state.

Actually, since the wire 5 has not yet been processed, the wire 5 is indicated by a two-dot-and-dash line. As illustrated in FIG. 5, in the state in which the predetermined time has passed, the range from a portion 100 of the wire 5 to a distal end 101 of the wire 5 becomes a portion processed by the bend process section 32 of the coil winding machine 30. The portion 100 is a portion of the wire 5, which is clamped by the third clamp section 37 and which has just been processed at the time point when the above predetermined time has passed.

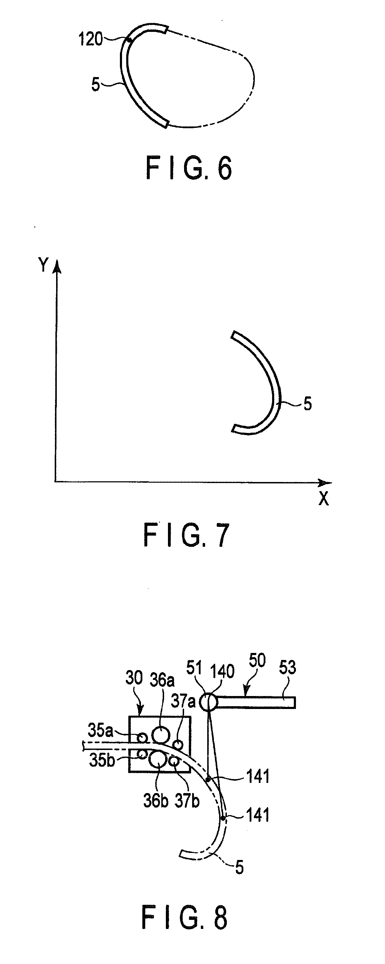

FIG. 6 is a plan view illustrating the shape of the processed portion in the above assumption. As illustrated in FIG. 6, in the above assumption, the processed portion of the wire 5 forms a part of the coil 6. In FIG. 6, the other part of the coil 6 is indicated by a two-dot-and-dash line.

The function 3-3 is a function of calculating an attitude and a position on XY coordinates of the portion having the shape calculated by the function 3-2, that is, the portion bend-processed by the process section 32 in the above assumption. The function 3-3 is described more concretely. As illustrated in FIG. 5, the computer 60 calculates a tangent 110 of the processed portion on the XY coordinates. The tangent 110 can be calculated, for example, from the positions of the rollers 37a and 37b of the third clamp section 37.

The computer 60 sets a reference line on the XY coordinates. The computer 60 calculates the position on the XY coordinates of the processed portion, based on the information of the shape of the processed portion which has been obtained by the function 3-2, and calculates the attitude on the XY coordinates of the processed portion, based on the inclination of the tangent 110 to the reference line. FIG. 7 is a plan view illustrating the position and attitude on the XY coordinates of the portion of the wire 5, which has been processed by the process section 43.

The function 3-3 is a function of creating, before processing the wire 5, the rotation information for rotating the mounting stage 40, thereby to mount the portion of the wire 5, which has been processed by the coil winding machine 30, at the mounting target position 90 which is set on the mounting surface 41 of the mounting stage 40, which has been calculated by the function 2-1.

For example, a portion 120, shown in FIG. 6, of the portion of the wire 5 processed by the process section 32, is a portion which is mounted at a part 121 of the mounting target position 90 which is set on the mounting surface 41. In this manner, the rotation information of the mounting stage 40 is created so that each portion of the coil 6 can be mounted on the corresponding part of the mounting target position 90.

The computer 60 assumes the information obtained by the function 3-2, that is, the state in which the wire 5 has been bend-processed, before the wire 5 is actually bend-processed by the coil winding machine 30. Based on the information of the shape of the bend-processed wire 5 in this assumption and the information of the attitude, the computer 60 creates the rotation information for rotating the mounting stage 40 so that the wire 5 may be properly mounted on the mounting target portion 90.

The fourth function is a function of calculating, before bend-processing the wire 5, control information which is necessary for controlling the driving section 52, thereby to move the support section 80 to a support target position 130 which overlaps the mounting target position 90 in the vertical direction.

The support target position 130 is concretely described. The support target position 130 is a position where only the weight of the wire 5 acts on the wire 5. Specifically, at the support target position 130, a tensile force or the like, which acts in a direction intersecting with the vertical direction, does not act on the wire 5. Thus, it is possible to prevent a bend, other than the bend applied by the process section 32, from occurring in the wire 5.

The fourth function is concretely described. As described above, the mounting stage 40 rotates so that the portion of the wire 5, which has been processed by the process section 32, may be mounted on the mounting target position 90. Thus, the support target position 130 moves in accordance with the rotation of the mounting stage 40. In calculating the support target position 130, the fourth function further includes functions 4-1, 4-2, 4-3 and 4-4.

The function 4-4 calculates the position and attitude on the XY coordinates of the processed portion of the wire 5 in the case of assuming the state in which the wire 5 has been processed by the wire winding machine 30. In the present embodiment, since the position and attitude have already been calculated in the above-described third function, the calculated result is used.

The function 4-2 is a function of calculating a distance between each position of the processed portion in the case of assuming the state in which the wire 5 has been processed, and a rotational center 140 of the rotary shaft portion 51 of the guiding device 50.

FIG. 8 illustrates a manner of calculating the distance between each position of the processed portion of the wire 5 in the case of assuming that the wire 5 has been processed, and the rotational center 140 of the rotary shaft portion 51 of the guiding device 50. The distance calculated by the function 4-2 is a distance between each position of the wire 5 and the rotational center 140 of the rotary shaft portion 51, when viewed in plan as illustrated in FIG. 8.

Although FIG. 8 illustrates the manner of calculating the distances between two locations 140, 141 of the wire 5 and the rotational center 140, distances between all positions of the wire 5 and the rotational center 140 are actually calculated, based on the coordinate information of the processed portion of the wire 5 in the case of assuming the state in which the wire 5 has been processed.

The function 4-3 is a function of detecting a position at which the distance calculated in the function 4-2 between each position of the wire 5 and the rotational center 140 of the rotational shaft portion 51 becomes equal to the distance from the rotational center 140 of the rotary shaft portion 51 to the support section 80, or in other words, the length of the support beam 53 in this embodiment. This position becomes the support target position 130.

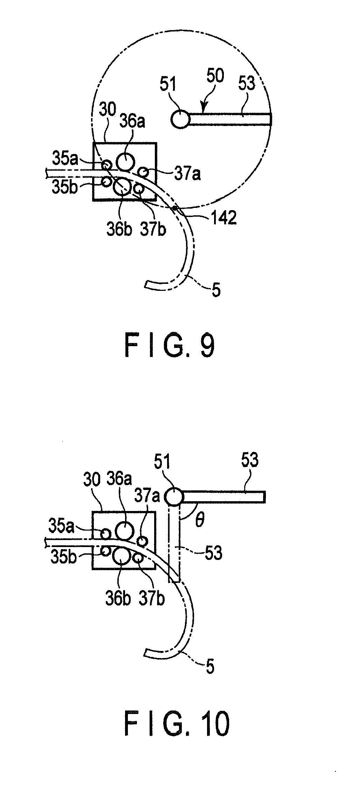

FIG. 9 is a plan view illustrating a portion 142 of an intersection in plan view between a circle having a center at the rotational center 140 of the driving section 52 and having a radius, which is equal to the length of the support beam 53, and the processed portion of the wire 5 in the case of assuming the state in which the wire 5 has been processed. The portion 142 becomes the support target position 130.

The function 4-4 is a function of calculating a rotational angle θ over which the support beam 53 is rotated from the initial position to the position where the support section 80 moves to the support target position 130. FIG. 10 is a plan view illustrating the rotational angle θ. FIG. 8, FIG. 9 and FIG. 10 illustrate the state in which the the support beam 53 is in the initial position.

Incidentally, in the above-described third and fourth functions, the state in which a predetermined time has passed since the wire 5 was processed is assumed, and the description has been given based on this assumption by way of example. Actually, however, not only each information in the predetermined time is calculated, but the information at respective time points during the time from the start of the process of the wire 5 to the end of the process is created. The intervals of the respective time points can arbitrarily be set.

The fifth function is a function of storing various information pieces calculated by the first to fourth functions. The sixth function is a function of transmitting to the motion controller 70 those information pieces among the various information pieces calculated by the first to fourth functions, which correspond to the elapsed time from the start of the process on the wire 5. To be more specific, the computer 60 creates and stores, by the first to third functions, the information which is necessary at each time point from the start of the process on the wire 5 to the end of this process. The computer 60 transmits to the motion controller 70 the information corresponding to the elapsed time from when the bend process was actually performed on the wire 5, among the stored information pieces at the respective time points.

Based on the various information pieces transmitted from the computer 60, the motion controller 70 sends operation signals to the coil winding machine 30, mounting stage 40 and guiding device 50.

Next, the operation of the coil forming apparatus 10 is described. To begin with, the operator, for example, inputs to the computer 60 the information of the shape of the coil 6, the length of the support beam 53, and the coordinate information of the rotational center 140 of the rotary shaft portion 51 of the guiding device 50. If these information pieces have been input, the computer 60 determines the feed speed of the wire 5 by the first function.

Next, the computer 60 creates the control information of the coil winding machine 30 by the second function. Subsequently, the computer 60 creates the rotation information of the mounting stage 40 by the third function. Then, the computer 60 creates, by the fourth function, the information of the rotational angle of the driving section 52 for moving the support section 80 to the support target position 130. Next, the computer 60 transmits the information corresponding to the elapsed time from the start of the process to the motion controller 70.

Based on the various information pieces created by the computer 60, the motion controller 70 operates the coil winding machine 30, mounting stage 40 and guiding device 50.

By the control of the motion controller 70, the rollers 31a and 31b of the feed section 31 are rotated and driven. Thereby, a wire is fed out from the bobbin 20. The wire 5, which is fed out from the bobbin 20, is fed to the bend process section 32.

In the bend process section 32, the respective rollers 35a, 35b, 36a, 36b, 37a and 37b of the clamp portions 35, 36 and 37 move, thereby performing the bend process on the wire 5.

Incidentally, the wire 5 may not be supported by the support section 80, until the distal end of the processed portion of the wire 5 reaches the support section 80. If the length of the processed portion of the wire 5 has become such a length as to reach the support section 80, the distal end of the wire 5 may be inserted, for example, by the operator, between the rollers 82 and 83 such that the wire 5 is supported by the support section 80.

The portion of the wire 5, which has been processed by the coil winding machine 30, is successively fed from the coil winding machine 30 to the support section 80 side. Since the wire 5 is supported by being clamped by the rollers 82 and 83, the wire 5 is movable relative to the support section 80. Thus, the processed wire 5, which is successively fed from the coil winding machine 30 to the support section side 80, passes through the support section 80 and is mounted on the mounting surface 41 of the mounting stage 40.

At this time, the mounting stage 40 is rotated so that the wire 5, which has passed through the support section 80, may be mounted on the mounting target position 90. In addition, at the same time as the mounting stage 40 rotates, the guiding device 50 moves the support section 80 onto the support target position 130. Thus, the support section 80 is always located at the support target position 130.

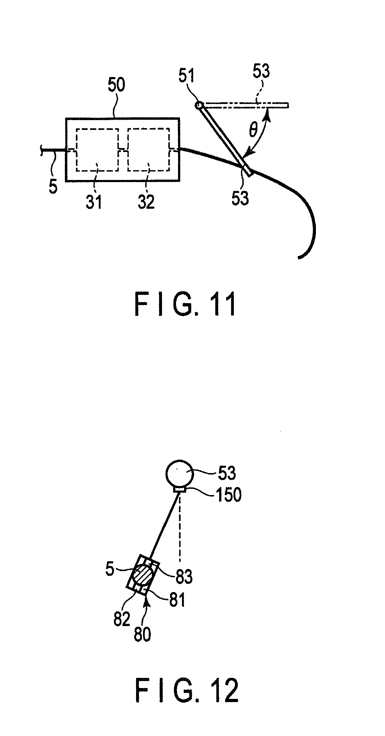

FIG. 11 illustrates a state in which the support section 80 has been moved onto the support target position 130 by the guiding device 50.

In this manner, the control information at the time of operating the coil winding machine 30, the control information at the time of operating the mounting stage 40 and the control information at the time of operating the guiding device 50 are calculated before the wire 5 is bend-processed by the coil winding machine 30, and the operation of the coil winding machine 30, the operation of the mounting stage 40 and the operation of the guiding device 50 are controlled by the single motion controller 70. Thus, the operation of the coil winding machine 30, the operation of the mounting stage 40 and the operation of the guiding device 50 are synchronized.

Specifically, it is not that the coil winding machine 30 performs the bend process on the wire 5 and the mounting stage 40 is operated so as to follow the bend process, but that the bend process on the wire 5 and the rotation of the mounting stage 40 are performed at the same time. Similarly, it is not that the mounting stage 40 is rotated and the guiding device 50 is operated so as to follow this rotation, but that the rotation of the mounting stage 40 and the operation of the guiding device 50 are performed at the same time.

If the bend process by the coil winding machine 30 is finished, the coil 6 is completed. The completed coil 6 is mounted on the mounting target position 90 of the mounting surface 41.

In the coil forming apparatus 10 with the above structure, since the support section 80 is automatically moved to the support target position 130 by the guiding device 50, the bend-processed wire 5 can efficiently be guided to the mounting stage 40.

In addition, since the operation of the coil winding machine 30, the operation of the mounting stage 40 and the operation of the guiding device 50 can be synchronized, it is possible to prevent the occurrence of an error in the operation between devices, such as an error in the operation of the mounting stage 40 relative to the operation of the coil winding machine 30, or an error in the operation of the guiding device 50 relative to the operation of the mounting stage 40. Therefore, the support section 80 can efficiently be guided to the support target position 130.

Besides, the guiding device 50 has the simple structure including the rotary shaft portion 51, driving section 52, support beam 53 and suspend wire 54. In addition, when the support section 80 is to be moved to the support target position 130, it should suffice if the rotary shaft portion 51 is rotated. In this manner, the guiding device 50 can be simply constructed, and the operation of the guiding device 50 can be made simple.

Next, a coil winding apparatus according to a second embodiment is described with reference to FIG. 12. Incidentally, the structures having the same functions as in the first embodiment are denoted by the same reference numerals as in the first embodiment, and a description thereof is omitted. In this embodiment, the coil forming apparatus 10 further includes a positional displacement detection device 150 which detects a positional displacement of the support section 80 relative to the support target position 130. The other structure is the same as in the first embodiment. This different point will be described in detail.

FIG. 12 is a front view illustrating the vicinity of the distal end of the support beam 53. As illustrated in FIG. 12, the positional displacement detection device 150 is provided at the distal end of the support beam 53. The positional displacement detection device 150 is configured to be able to detect an inclination angle of the suspend wire 54 to the vertical direction.

As has been described in connection with the first embodiment, at the support target position 130, only the own weight of the wire 5 acts on the wire 5. Thus, when the support section 80 is located at the support target position 130, the suspend wire 54 is parallel to the vertical direction by the own weight of the wire 5.

On the other hand, if the position of the support section 80 is displaced relative to the support target position 130, a tensile force acting in a direction intersecting with the vertical direction acts on the wire 5 which is supported on the support section 80, in addition to the own weight of the wire 5. Thus, the support section 80 is kept in the state in which the support section 80 is displaced relative to the support target position 130.

If the positional displacement detection device 150 detects the inclination angle of the suspend wire 54 to the vertical direction, the positional displacement detection device 150 transmits the detection result to the computer 60.

Based on the detection result of the positional displacement detection device 150, the computer 60 creates the control information of the guiding device 50 for moving the support section 80 to the support target position 130, and executes feedback to the control information of the guiding device 50 which was created in advance.

Specifically, the control information of the guiding device 50, which was created in advance, is corrected. Then, the corrected control information is transmitted to the motion controller 70. The motion controller 70 controls the guiding device 50, based on the corrected control information, thereby eliminating the positional displacement of the support section 80 relative to the support target position 130.

In the present embodiment, in addition to the advantageous effects of the first embodiment, the positional displacement of the support section 80 relative to the support target position 130 can be detected by the positional displacement detection device 150. In addition, based on this detection result, the corrected control information of the guiding device 50 for moving the support section 80 to the support target position 130 is created. Furthermore, since the guiding device 50 is controlled based on the corrected control information, the positional displacement of the support section 80 relative to the support target position 130 can be eliminated.

Besides, the positional displacement detection device 150 is configured to find the positional displacement of the support section 80 relative to the support target position 130, by making use of the own weight of the support section 80 and the own weight of the wire 5. Thus, the positional displacement can be detected by the simple structure.

In the meantime, in the present embodiment, the mounting stage 40 is configured to be movable, in order to move the relative position of the mounting stage 40 to the coil winding machine 30. In another example, the coil winding machine 30 may be configured to be movable relative to the mounting stage 40, so as to mount the wire 5 at the mounting target position.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A coil winding apparatus **characterized by** comprising:
a coil winding section (30) configured to perform a bend process on a wire material (5);
a mounting section (40) including a mounting surface (41) disposed below the coil winding section (30), the mounting section (40) being configured to be movable relative to the coil winding section (30) such that a bend-processed portion of the wire material (5) is mounted at a mounting target position which is preset on the mounting surface;
a support section (80) configured to support a portion of the wire material (5) between the coil winding section (30) and the mounting surface (41);
a moving section (51,52, 53, 54) configured to move a position of the support section (80); and
a control section (60,70) configured to control the moving section (51,52,53,54) such that the position of the support section (80) moves to a support target position which overlaps the mounting target position in a substantially vertical direction.

2. The coil winding apparatus of Claim 1, **characterized by** further comprising:
a control information creation module (60) configured to create, before the bend process is performed on the wire material (5), control information of the moving section (51,52,53,54), the control information being used in order to move the support section (80) to the support target position; and
a memory module (60) configured to store the control information,
wherein the control section is configured to control the moving section (51,52,53,54) in a manner to move the position of the support section (80) to the support target position, based on the control information stored in the memory module (60), in accordance with a movement of the mounting section (40) relative to the coil winding section (30).

3. The coil winding apparatus of Claim 2, **characterized by** further comprising a detection section (150) configured to detect a displacement amount of the position of the support section (80) relative to the support target position, the support section (80) having been moved by the moving section (51,52,53,54),
wherein the control section (60,70) is configured to control the moving section (51,52,53,54) in a manner to move the support section (80) to the support target position, based on the displacement amount.

4. The coil winding apparatus of Claim 2, **characterized in that** the moving section (51,52,53,54) includes a rotary shaft portion (51) configured to be rotatable about a rotational axis parallel to a direction intersecting with a horizontal direction, a driving section (52) configured to rotate the rotary shaft portion, a support beam (53) coupled to the rotary shaft portion (51) and extending in a direction intersecting with the vertical direction, and a suspend cable (54) suspended from the support beam (53),
the support section (80) is provided at a lower end of the suspend cable (54), and
the control information includes rotational angle information of a rotational angle from an initial position of the rotary shaft portion (51).

5. The coil winding apparatus of Claim 3, **characterized in that** the moving section (51,52,53,54) includes a rotary shaft portion (51) configured to be rotatable about a rotational axis parallel to a direction intersecting with a horizontal direction, a driving section (52) configured to rotate the rotary shaft portion (51), a support beam (53) coupled to the rotary shaft portion (51) and extending in a direction intersecting with the vertical direction, and a suspend cable (54) suspended from the support beam (53),
the support section (80) is provided at a lower end of the suspend cable (54), and
the detection section (150) is configured to detect, as the displacement amount, an inclination angle of the suspend cable (54) to the vertical direction.

6. A coil winding method **characterized by** comprising:
creating control information which is used in order to control a moving section (51,52,53,54) configured to move a support section (80) configured to support a portion of a wire material (5) between a coil winding section (30) configured to perform a bend process on the wire material (5) and a mounting surface (41) of a mounting section (40) disposed below the coil winding section (30), the control information being created before the bend process is performed on the wire material (5), the control information being control information of the moving section (51,52,53,54) for moving the support section (80) to a support target position which overlaps, in a substantially vertical direction, a mounting target position which is preset on the mounting surface (41);
storing the control information in a memory module (60) ;
performing the bend process on the wire material (5) by the coil winding section (30);
controlling the moving section (51,52,53,54), based on the control information of the moving section (51,52,53,54) stored in the memory module (60); and
moving a relative position of the mounting section (51,52,53,54) to the coil winding section (30) such that the wire material (5), which is fed from the coil winding section (30), to the mounting target position.

7. The coil winding method of Claim 6, **characterized by** further comprising:
detecting a displacement amount of a position of the support section (80) relative to the support target position, the support section (80) having been moved by the moving section (51,52,53,54); and
controlling the moving section (51,52,53,54) in a manner to move the support section (80) to the support target position, based on the detected displacement amount.

8. The coil winding method of Claim 6, **characterized in that** the moving section (51,52,53,54) includes a rotary shaft portion (51) configured to be rotatable about a rotational axis parallel to a direction intersecting with a horizontal direction, a driving section (52) configured to rotate the rotary shaft portion (51), a support beam (53) coupled to the rotary shaft portion (51) and extending in a direction intersecting with the vertical direction, and a suspend cable (54) suspended from the support beam (53),
the support section (80) is provided at a lower end of the suspend cable, and
an inclination angle of the suspend cable (54) to the vertical direction is detected as the displacement amount.
